(19) Europäisches Patentamt
European Patent Office
Office européen des brevets

(11) **EP 3 546 295 B1**

(12) **EUROPÄISCHE PATENTSCHRIFT**

(45) Veröffentlichungstag und Bekanntmachung des Hinweises auf die Patenterteilung:
**24.02.2021  Patentblatt 2021/08**

(51) Int Cl.:
***B60R 19/18*** *(2006.01)*

(21) Anmeldenummer: **18165349.4**

(22) Anmeldetag: **30.03.2018**

(54) **ENERGIEABSORBERELEMENT FÜR EIN KRAFTFAHRZEUG**

ENERGY ABSORBING ELEMENT FOR AUTOMOTIVE VEHICLE

ELEMENT D'ABSORPTION D'ENERGIE POUR VEHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.10.2019  Patentblatt 2019/40**

(73) Patentinhaber: **voestalpine Krems GmbH**
**3500 Krems an der Donau (AT)**

(72) Erfinder:
 • **Rouet, Christian**
**3494 Gedersdorf (AT)**
 • **Stumvoll, Matthias**
**3610 Weissenkirchen in der Wachau (AT)**

(74) Vertreter: **Jell, Friedrich**
**Bismarckstrasse 9**
**4020 Linz (AT)**

(56) Entgegenhaltungen:
EP-A1- 3 006 271        DE-A1- 10 122 712
DE-A1-102013 202 607        JP-A- 2008 296 716
US-A1- 2005 285 414

**Beschreibung**

Die Erfindung betrifft ein Energieabsorberelement für ein Kraftfahrzeug nach dem Oberbegriff des Anspruchs 1.

Aus der WO2006/136405A1 sind Energieabsorberelemente mit hoher Steifigkeit bei geringer Querabmessungen bekannt (WO2006/136405A1), die ein geschlossenes Hohlprofil aus einem Flachmaterial, nämlich Stahlblech, aufweisen. Dieses Hohlprofil besteht aus zwei ersten gerade Seitenwänden und zwei zweiten Seitenwänden mit Längssicken. Die Längssicken werden von gleich ausbildeten Dreiecksicken geformt, deren einander gegenüberliegenden Sickenböden voneinander beabstandet sind. Außerdem weist das Hohlprofil an den Ecken eine gleiche Eckenabrundung auf. An jede dieser Eckenabrundungen schließt sowohl ein erster gerader Seitenabschnitt der ersten geraden Seitenwand, als auch die zweite Seitenwand an. Nachteilig zeigt das Hohlprofil der WO2006/136405A1 bei fortschreitender Energieabsorption einen erheblichen Abfall des Kraftniveaus nach einem anfänglich steilen Kraftanstieg. Das Energieabsorberelement der WO2006/136405A1 ist daher nicht geeignet, die kinetische Energie zum Zeitpunkt des Schadensfalls nach einem anfänglich steilen Kraftanstieg - bei zeitlich weiter fortschreitender Energieabsorption - in ein konstant hohes Kraftniveau überführen, um die auf Insassen des Kraftfahrzeugs einwirkende Beschleunigung zu minimieren.

Die DE 10 2013 202607 A1 offenbart ein Energieabsorberelement mit einer Wabenstruktur in Form eines zehnseitigen Polygons. Dabei können einige Massparameter variiert werden, um eine optimale Aufprallabsorption zu erzielen. Die Erfindung hat sich daher die Aufgabe gestellt, ausgehend vom eingangs geschilderten Stand der Technik, ein Energieabsorberelement zu schaffen, das im Schadensfall trotz hohem Absorptionsgrad geringe Beschleunigungswerte auf Insassen des Kraftfahrzeugs ausübt.

Die Erfindung löst die gestellte Aufgabe durch die Merkmale der Ansprüche 1 und 3.

Erfüllt das Hohlprofil die Bedingungen $\frac{sa}{b} < 0{,}24$, $\frac{sb}{h-2r} > 0{,}35$ und $\frac{b}{h} = 0{,}28$ bis 0,74, dann kann ein Energieabsorberelement geschaffen werden, das sich im Schadensfall durch eine spitzenfreie Kraft-Weg-Kennlinie bzw. Kraft-Zeit-Kennlinie mit hohem Flächenintegral auszeichnet. Durch diese erfindungsgemäße Vorschrift ergibt sich nämlich am Hohlprofil ein Querschnitt, der nach einem anfänglichen steilen Anstieg der erforderlichen Stauchkraft durch eine besonders feine Faltbildung diese anfängliche Stauchkraft hält bzw. im Vergleich zu dieser nicht derart stark abfällt. Dadurch kann das Energieabsorberelement eine möglichst konstante Stauchkraft zur Verfügung stellen - was sowohl einen hohen Absorptionsgrad als auch geringe Beschleunigungswerte auf Insassen sicherstellen kann.

Eine spitzenfreie Kraft-Weg-Kennlinie bzw. Kraft-Zeit-Kennlinie mit hohem Flächenintegral kann bei einem Hohlprofil mit beispielsweise zehn ebenen Seitenwandflächen unter folgenden Voraussetzungen erreicht werden, nämlich dass die ersten Seitenwände eine erste Breite bi aufweisen, dass die zweiten Seitenwände je zwei gerade Seitenabschnitte mit einer zweiten Breite hi aufweisen, wobei die zweiten Seitenabschnitte jeweils an eine Eckenabrundung anschließen und sich bis zur jeweiligen Längssicke erstrecken, wobei die Längssicken gerade verlaufende Sickenseitenwandabschnitte mit einer dritten Bereite si aufweisen, wobei das Hohlprofil folgende Bedingungen $\frac{hi}{si} = 0{,}45$ bis 2, $\frac{hi}{bi} = 0{,}35$ bis 1,75 und $\frac{bi}{si} = 0{,}7$ bis 2 erfüllt.

Das gleiche kann bei einem anderen Hohlprofil mit beispielsweise sechs ebenen Seitenwandflächen erreicht werden, wenn die Längssicken an die jeweiligen Eckenabrundungen anschließen und das Hohlprofil die folgende Bedingung $\frac{r}{d} > 6$ erfüllt.

Verlaufen die zweiten geraden Seitenabschnitte erfindungsgemäss normal zu den ersten geraden Seitenwänden, ist die Herstellung des Hohlprofils erleichterbar. Zudem kann diese geometrische Ausbildung dazu beitragen, dass sich im Schadensfall das Hohlprofil fein faltet und damit einen hohen Absorptionsgrad sicherstellt.

Vorstehend Genanntes kann weiter verbessert werden, wenn die zweiten geraden Seitenabschnitte gleichlang und/oder die ersten geraden Seitenwände gleichlang sind.

Für eine für Fahrzeugkarosserie geforderte Stauchkraft kann sich aus ausreichend herausstellen, wenn die Materialstärke d des Flachmaterials des Hohlprofils maximal 2 mm beträgt.

Vorzugsweise liegt die Zugfestigkeit des Flachmaterials $R_m$ im Bereich von 600 MPa bis 1200 MPa und ist die Bruchdehnung des Flachmaterials größer 9%, um so einen vergleichsweise hohen Absorptionsgrad am Energieabsorberelement sicherstellen zu können.

Beispielsweise kann das Flachmaterial aus einem Dualphasenstahl oder Complexphasenstahl bestehen, um eine vergleichsweise hohe Stauchkraft am Energieabsorberelement zu erreichen.

Besonders auszeichnen gegenüber dem Stand der Technik kann sich eine Fahrzeugkarosserie mit dem erfindungsgemäßen Energieabsorberelement.

In den Figuren ist beispielsweise der Erfindungsgegenstand anhand mehrere Ausführungsvarianten näher dargestellt. Es zeigen

Fig. 1 eine Querschnittansicht zu einem Hohlprofil eines Energieabsorberelements nach dem Stand der Technik,
Figuren 2 und 3 Querschnittansichten zu Hohlprofilen von erfindungsgemäßen Energieabsorberelementen und
Fig. 4 eine Darstellung zu Kraft-Zeit-Kennlinien der Energieabsorberelemente nach den Figuren 1 bis 3.

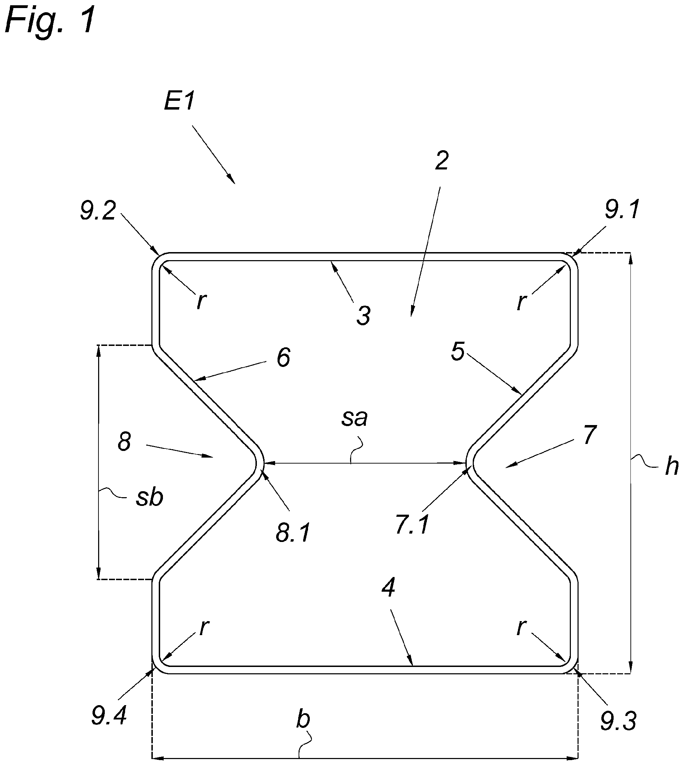

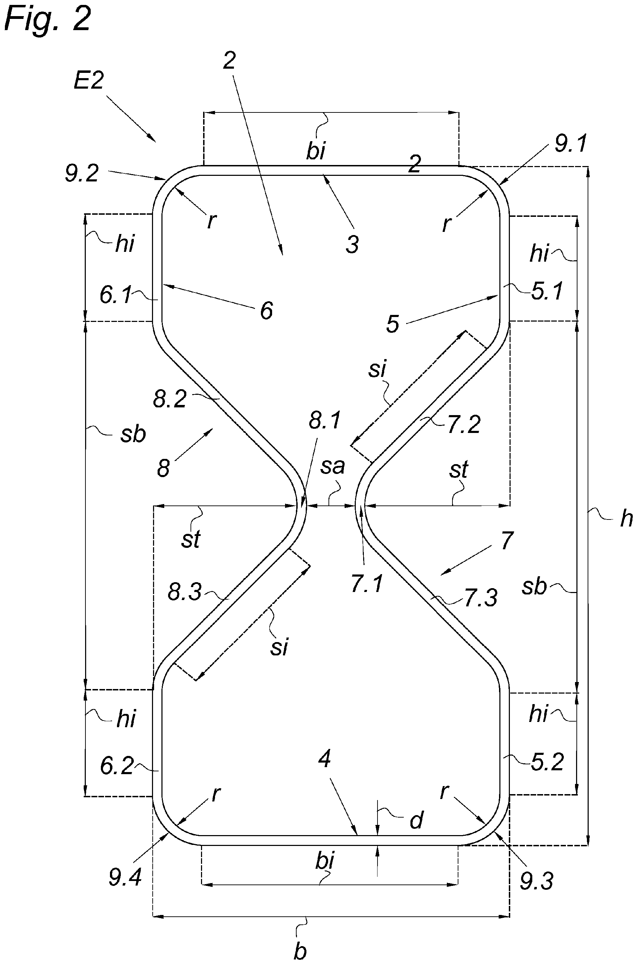

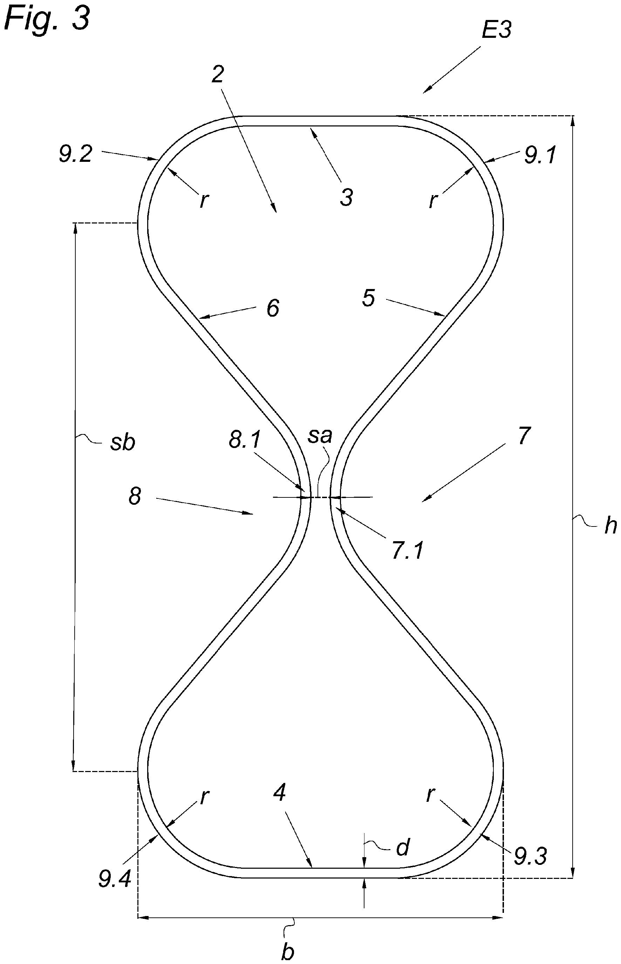

Nach den Figuren 1 bis 3 sind zu den Energieabsorberelement E1, E2, E3 dessen Hohlprofile 2 in einer Querschnittansicht dargestellt. Das geschlossene Hohlprofil 2 wird aus einem Flachmaterial mit einer Materialstärke d hergestellt. Beispielsweise wird zur Erzeugung der Energieabsorberelemente E2, E3 der Figuren 2 und 3 ein Rollprofilierverfahren angewandt.

Das eine Profilhöhe h und eine Profilbreite b aufweisende Hohlprofil 2 wird von vier Seitenwänden 3, 4, 5, 6 gebildet, von denen zwei einander gegenüberliegende, erste Seitenwände 3, 4 gerade verlaufen. Die anderen beiden zweiten Seitenwände 5, 6 weisen jeweils eine offene Längssicke 7, 8 auf, die im Querschnitt dreieckförmig ausgebildet sind, und zwar geometrisch gleich ausgebildet, beispielsweise in Bezug auf Sickentiefe st, Sickenbreite sb, etc., und liegen sich direkt gegenüber. Die beiden Längssicken 7, 8 berühren sich nicht - es besteht zwischen deren Sickenböden 7.1, 8.1 ein Abstand sa.

Das Hohlprofil 2 weist zudem an seinen vier Ecken je eine geometrisch gleiche Eckenabrundung 9.1, 9.2, 9.3, 9.4 mit dem gleichen Radius r auf. An diese Eckenabrundungen 9.1, 9.2, 9.3, 9.4 schließen die diesbezüglichen Seitenwände 3, 4, 5, 6 an - und zwar sowohl die jeweilige gerade verlaufende erste Seitenwand 3 bzw. 4 als auch die jeweilige zweite Seitenwand 5, 6. Um ein Energieabsorberelement E2, E3 mit hohem Absorptionsgrad und geringen Beschleunigungswerten auf Insassen des Kraftfahrzeugs sicherstellen zu können, muss das Hohlprofil 2 den folgenden Bedingungen genügen:

- Der Abstand sa zwischen den Sickenböden der Längssicke 7, 8 des Hohlprofils 2 dividiert durch die Profilbreite b des Hohlprofils 2 ist kleiner 0,24 bzw. $\frac{sa}{b} < 0,24$

- Die Sickenbreite sb der Längssicke 7, 8 des Hohlprofils 2 dividiert durch die Differenz von Profilhöhe h des Hohlprofils 2 und zweimal den Radius r der Eckenrundung 9.1, 9.2, 9.3, 9.4 des Hohlprofils 2 ist größer 0,35 bzw. $\frac{sb}{h-2r} > 0,35$

- Profilbreite b des Hohlprofils 2 dividiert durch die Profilhöhe h des Hohlprofils 2 liegt im Bereich von 0,28 bis 0,74 bzw. $\frac{b}{h} = 0,28$ bis 0,74

In Tabelle 1 sind beispielsweise die geometrischen Abmessungen der verschiedenen Ausführungen zu den Hohlprofil 2 der Energieabsorberelement E1, E2 und E3 zu entnehmen.

Tabelle 1: Verschiedene Energieabsorberelemente

|  | b [mm] | h [mm] | bi [mm] | hi [mm] | sa [mm] | sb [mm] | si [mm] | r [mm] | d [mm] |
|---|---|---|---|---|---|---|---|---|---|
| E1 | 66.92 | 108.44 | 33.92 | 6.22 | 28.25 | 63.00 | 11.55 | 16.50 | 1.5 |
| E2 | 56.00 | 106.60 | 40.00 | 16.00 | 7.66 | 58.60 | 25.43 | 8.00 | 1.5 |
| E3 | 55.38 | 115.90 | 22.38 | 0 | 2.97 | 82.90 | 26.42 | 16.50 | 1.5 |

b Profilbreite des Hohlprofils
h Profilhöhe des Hohlprofils
bi Bereite einer geraden ersten Seitenfläche des Hohlprofils
hi Bereite eines geraden zweiten Seitenabschnitts der zweiten Seitenfläche des Hohlprofils
sa Abstand zwischen den Sickenböden der Längssicken des Hohlprofils
sb Sickenbreite einer Längssicke
si Bereite des gerade verlaufenden Sickenwandabschnitts der Längssicke
r Radius der Eckenrundung des Hohlprofils
d Materialstärke des Flachmaterials des Hohlprofils

Gemäß den nach Tabelle 1 dargestellten geometrischen Abmessungen führt dies nach Tabelle 2 zu folgenden Verhältnissen an den Hohlprofilen.

Tabelle 2: Bedingungen zu den Hohlprofilen der Energieabsorberelemente nach Tabelle 1

|  | $\dfrac{sa}{b}$ | $\dfrac{sb}{h-2r}$ | $\dfrac{b}{h}$ | $\dfrac{hi}{si}$ | $\dfrac{hi}{bi}$ | $\dfrac{bi}{si}$ | $\dfrac{r}{d}$ |
|---|---|---|---|---|---|---|---|
| **E1** | **0.422** | 0.84 | 0.62 | 0.54 | **0.18** | **2.94** | - |
| **E2** | 0.137 | 0.65 | 0.53 | 0.63 | 0.40 | 1.57 | - |
| **E3** | 0.054 | 1.00 | 0.48 | - | - | - | 11 |

Wie der Tabelle 2 zu entnehmen, erfüllt das Hohlprofil 2 des Energieabsorberelements E1 die erfindungsgemäße erste Vorschrift (unterstrichen in Tabelle 2 dargestellt) der drei Vorschriften (von links nach rechts betrachtet) nach Anspruch 1 nicht. Außerdem werden zwei der weiteren Bedingungen nach Anspruch 2 vom E1 Hohlprofil 2 nicht erfüllt.

Im Gegensatz dazu erfüllen die E2 und E3 Hohlprofile 2 der Energieabsorberelemente E2 und E3 die ersten drei Vorschriften und auch die weiteren Bedingungen, nämlich nach Anspruch 2 das E2 Hohlprofil 2 und nach Anspruch 3 das E3 Hohlprofil 2.

Das Hohlprofil 2 des Energieabsorberelements E2 unterschiedet sich vom Hohlprofil 2 des Energieabsorberelements E3 durch die Anzahl an ebenen Seitenflächen. So weist das E2 Hohlprofil 2 zehn ebene Seitenflächen auf, wohingegen das E3 Hohlprofil 2 sechs ebene Seitenflächen aufweist.

Dieser Unterschied kann daran erkannt werden, dass das E2 Hohlprofil 2 im Gegensatz zum E3 Hohlprofil an den zweiten Seitenwände 5, 6 je zwei gerade Seitenabschnitte 5.1, 5.2, 6.1, 6.2 mit einer zweiten Breite hi aufweist, wobei diese zweiten Seitenabschnitte 5.1, 5.2, 6.1, 6.2 jeweils an eine Eckenabrundung 9.1, 9.2, 9.3, 9.4 anschließen und sich bis zur jeweiligen Längssicke 7, 8 erstrecken.

Das E2 Hohlprofil 2 erfüllt zudem die an die ersten drei anschließenden weiteren drei Bedingungen der Tabelle 2, wobei in diese Bedingungen auch eine dritte Breite si eingeht - wobei diese dritte Bereite si der gerade verlaufenden Sickenseitenwandabschnitte 7.2, 7.3, 8.2, 8.3 der Längssicken 7, 8 zugehört. Hierzu wird im Allgemeinen erläutert, dass sich eine Zarge der Längssicken 7, 8 durch einen Sickenseitenwandabschnitt 7.2, 7.3, 8.2, 8.3 (auch bekannt unter gemeinsamen Tangentenstrecke) und den beiden daran anschließenden Radien der Längssicke 7, 8 ausbilden kann.

Das E3 Hohlprofil 2, das keine an die Eckenabrundungen 9.1, 9.2, 9.3, 9.4 anschließenden geraden Seitenabschnitte aufweist -hier schließen nämlich die Längssicken 7, 8 an die Eckenabrundungen 9.1, 9.2, 9.3, 9.4 an-, erfüllt die ganz rechte Bedingung der Tabelle 2 und stellt daher auch ein erfindungsgemäßes Ausführungsbeispiel dar.

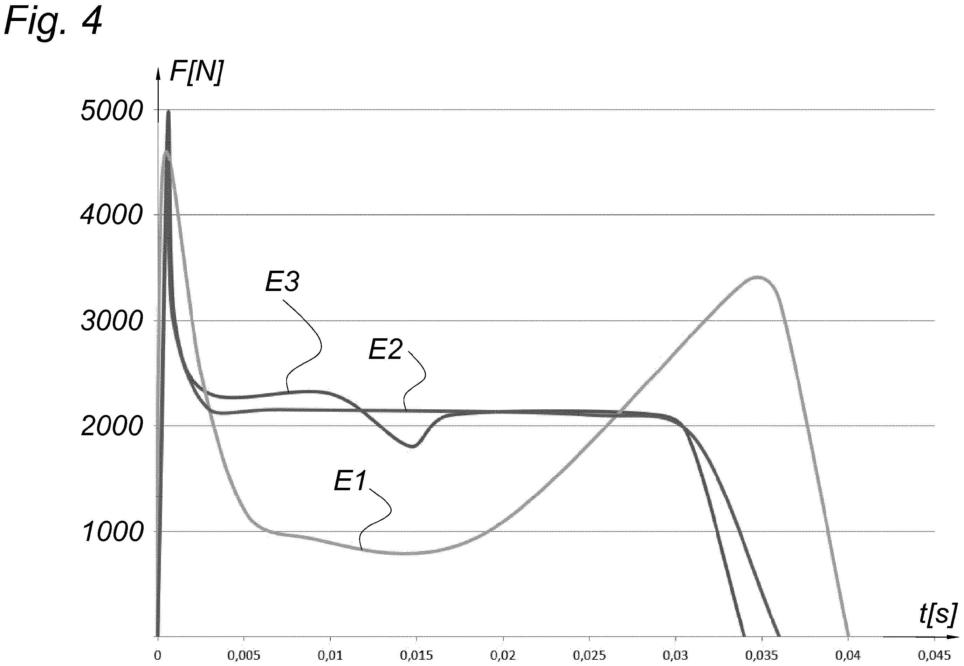

Damit können die erfindungsgemäßen E2, E3 Hohlprofile 2 -wie in Fig. 4 dargestellteinen anfänglich steilen Kraftanstieg, in ein konstant hohes Kraftniveau überführen. Die E2, E3 Hohlprofile 2 können nämlich aufgrund einer feinen Faltung im Gegensatz zu dem E1 Hohlprofil 2 andere Kraftverläufe nahezu linear - und ohne Spitzen im Kraftverlauf - eine konstante Stauchkraft zur Absorption von Energie zur Verfügung stellen. Dies hält jene auf Insassen des Kraftfahrzeugs einwirkende Beschleunigung minimal, was die erfindungsgemäßen E2, E3 Hohlprofile 2 gegenüber anderen Hohlprofilen, welche die erfindungsgemäße Vorschrift nicht erfüllen, auszeichnet.

Wie zudem den Figuren zu entnehmen, verlaufen die zweiten geraden Seitenabschnitte 5.1, 5.2, 6.1, 6.2 normal zu den ersten geraden Seitenwänden 3, 4. Außerdem sind die zweiten geraden Seitenabschnitte 5.1, 5.2, 6.1, 6.2 gleich lang - dies trifft auch auf die ersten geraden Seitenwände 3, 4 zu. Die Materialstärke (d) des Flachmaterials des Hohlprofils 2 beträgt maximal 2 mm, nämlich 1,5 mm. Die Zugfestigkeit des Flachmaterials $R_m$ liegt im Bereich von 600 MPa bis 1200 MPa, nämlich bei 800 MPa, und die Bruchdehnung des Flachmaterials ist größer 9% ist, nämlich ist 13%. Das Flachmaterial besteht aus einem Dualphasenstahl.

## Patentansprüche

1. Energieabsorberelement für ein Kraftfahrzeug mit einem geschlossenen Hohlprofil (2) aus einem Flachmaterial mit einer Materialstärke (d), wobei das Hohlprofil (2) eine Profilhöhe (h), eine Profilbreite (b) und vier Seitenwände (3, 4, 5, 6) aufweist, von denen zwei einander gegenüberliegenden, erste Seitenwände (3, 4) gerade verlaufen und die anderen zwei einander gegenüberliegenden, zweiten Seitenwände (5, 6) je eine im Querschnitt dreieckförmige, insbesondere offene, Längssicke (7, 8) mit einer Sickenbreite (sb) aufweisen, welche Längssicken (7, 8) gleich ausgebildet sind und zwischen ihren einander gegenüberliegenden Sickenböden (7.1, 8.1) einen Abstand (sa) besteht, wobei das Hohlprofil (2) an den Ecken gleiche Eckenabrundungen (9.1, 9.2, 9.3, 9.4) mit einem Radius (r) aufweist, an die sowohl die jeweilige erste gerade Seitenwand (3, 4) als auch die jeweilige zweite Seitenwand (5, 6) anschließen, **dadurch gekennzeichnet, dass** das Hohlprofil (2) folgende Bedingungen

$$\frac{sa}{b} < 0,24$$

$$\frac{sb}{h - 2r} > 0,35$$

$$\frac{b}{h} = 0,28 \text{ bis } 0,74$$

erfüllt, wobei die zweiten geraden Seitenabschnitte (5.1, 5.2, 6.1, 6.2) normal zu den ersten geraden Seitenwänden (3, 4) verlaufen.

2. Energieabsorberelement nach Anspruch 1, **dadurch gekennzeichnet, dass** die ersten Seitenwände (3, 4) eine erste Breite (bi) aufweisen, dass die zweiten Seitenwände (5, 6) je zwei gerade Seitenabschnitte (5.1, 5.2, 6.1, 6.2) mit einer zweiten Breite (hi) aufweisen, wobei die zweiten Seitenabschnitte (5.1, 5.2, 6.1, 6.2) jeweils an eine Eckenabrundung (9.1, 9.2, 9.3, 9.4) anschließen und sich bis zur jeweiligen Längssicke (7, 8) erstrecken, wobei die Längssicken (7, 8) gerade verlaufenden Sickenseitenwandabschnitte (7.2, 7.3, 8.2, 8.3) mit einer dritten Bereite (si) aufweisen, wobei das Hohlprofil (2) folgende Bedingungen

$$\frac{hi}{si} = 0,45 \text{ bis } 2$$

$$\frac{hi}{bi} = 0,35 \text{ bis } 1,75$$

$$\frac{bi}{si} = 0,7 \text{ bis } 2$$

erfüllt.

3. Energieabsorberelement für ein Kraftfahrzeug mit einem geschlossenen Hohlprofil (2) aus einem Flachmaterial mit einer Materialstärke (d), wobei das Hohlprofil (2) eine Profilhöhe (h), eine Profilbreite (b) und vier Seitenwände (3, 4, 5, 6) aufweist, von denen zwei einander gegenüberliegenden, erste Seitenwände (3, 4) gerade verlaufen und die anderen zwei einander gegenüberliegenden, zweiten Seitenwände (5, 6) je eine im Querschnitt dreieckförmige, insbesondere offene, Längssicke (7, 8) mit einer Sickenbreite (sb) aufweisen, welche Längssicken (7, 8) gleich ausgebildet sind und zwischen ihren einander gegenüberliegenden Sickenböden (7.1, 8.1) einen Abstand (sa) besteht, wobei das Hohlprofil (2) an den Ecken gleiche Eckenabrundungen (9.1, 9.2, 9.3, 9.4) mit einem Radius (r) aufweist, an die sowohl die jeweilige erste gerade Seitenwand (3, 4) als auch die jeweilige zweite Seitenwand (5, 6) anschließen, **dadurch gekennzeichnet, dass** das Hohlprofil (2) folgende Bedingungen

$$\frac{sa}{b} < 0,24$$

$$\frac{sb}{h - 2r} > 0,35$$

$$\frac{b}{h} = 0{,}28 \text{ bis } 0{,}74$$

erfüllt, wobei die Längssicken (7, 8) an die jeweiligen Eckenabrundungen (9.1, 9.2, 9.3, 9.4) anschließen und das Hohlprofil (2) die folgende Bedingung

$$\frac{r}{d} > 6$$

erfüllt.

4. Energieabsorberelement nach einem der Ansprüche 1 bis 2, **dadurch gekennzeichnet, dass** die zweiten geraden Seitenabschnitte (5.1, 5.2, 6.1, 6.2) gleich lang sind.

5. Energieabsorberelement nach einem der Ansprüche 1 bis 4, **dadurch gekennzeichnet, dass** die ersten geraden Seitenwände (3, 4) gleichlang sind.

6. Energieabsorberelement nach einem der Ansprüche 1 bis 5, **dadurch gekennzeichnet, dass** die Materialstärke (d) maximal 2 mm beträgt.

7. Energieabsorberelement nach einem der Ansprüche 1 bis 6, **dadurch gekennzeichnet, dass** die Zugfestigkeit des Flachmaterials $R_m$ im Bereich von 600 MPa bis 1200 MPa liegt und die Bruchdehnung des Flachmaterials größer 9% ist.

8. Energieabsorberelement nach einem der Ansprüche 1 bis 7, **dadurch gekennzeichnet, dass** das Flachmaterial aus einem Dualphasenstahl oder Complexphasenstahl besteht.

9. Fahrzeugkarosserie mit einem Energieabsorberelement (E2, E3) nach einem der Ansprüche 1 bis 8.

**Claims**

1. Energy absorber element for a motor vehicle having a closed hollow profile (2) made of a flat material with a material thickness (d), wherein the hollow profile (2) has a profile height (h), a profile width (b) and four side walls (3, 4, 5, 6), of which two mutually opposing, first side walls (3, 4) are straight and the other two opposite, second side walls (5, 6) each have a cross-sectionally triangular, more particularly open, longitudinal bead (7, 8) with a bead width (sb), which longitudinal beads (7, 8) are of identical design and have a spacing (sa) between their mutually opposite bead bases (7.1, 8.1), wherein the hollow profile (2) has identical rounded corner portions (9.1, 9.2, 9.3, 9.4) at the corners with a radius (r), to which both the respective first straight side wall (3, 4) and the respective second side wall (5, 6) adjoin, **characterized in that** the hollow profile (2) fulfils the following conditions

$$\frac{sa}{b} < 0.24$$

$$\frac{sb}{h - 2r} > 0.35$$

$$\frac{b}{h} = 0.28 \text{ to } 0.74$$

wherein the second straight side sections (5.1, 5.2, 6.1, 6.2) extend normally to the first straight side walls (3, 4).

2. Energy absorber element according to claim 1, **characterized in that** the first side walls (3, 4) have a first width (bi), **in that** the second side walls (5, 6) each have two straight side sections (5.1, 5.2, 6.1, 6.2) with a second width (hi), wherein the second side sections (5.1, 5.2, 6.1, 6.2) each adjoin a rounded corner portion (9.1, 9.2, 9.3, 9.4) and extend to the respective longitudinal bead (7, 8), wherein the longitudinal beads (7, 8) have straight bead side wall sections (7.2, 7.3, 8.2, 8.3) with a third width (si), wherein the hollow profile (2) fulfils the following conditions

$$\frac{hi}{si} = 0.45 \text{ to } 2$$

$$\frac{hi}{bi} = 0.35 \text{ to } 1.75$$

$$\frac{bi}{si} = 0.7 \text{ to } 2.$$

3. Energy absorber element for a motor vehicle having a closed hollow profile (2) made of a flat material with a material thickness (d), wherein the hollow profile (2) has a profile height (h), a profile width (b) and four side walls (3, 4, 5, 6), of which two mutually opposing, first side walls (3, 4) are straight and the other two opposite, second side walls (5, 6) each have a cross-sectionally triangular, more particularly open, longitudinal bead (7, 8) with a bead width (sb), which longitudinal beads (7, 8) are of identical design and have a spacing (sa) between their opposite bead bases (7.1, 8.1), wherein the hollow profile (2) has identical rounded corner portions (9.1, 9.2, 9.3, 9.4) at the corners with a radius (r), to which both the respective first straight side wall (3, 4) and the respective second side wall (5, 6) adjoin, **characterized in that** the hollow profile (2) fulfils the following conditions

$$\frac{sa}{b} < 0.24$$

$$\frac{sb}{h - 2r} > 0.35$$

$$\frac{b}{h} = 0.28 \text{ bis } 0.74,$$

wherein the longitudinal beads (7, 8) adjoin the respective rounded corner portions (9.1, 9.2, 9.3, 9.4) and the hollow profile (2) fulfils the following condition

$$\frac{r}{d} > 6.$$

4. Energy absorber element according to one of claims 1 to 2, **characterized in that** the second straight side sections (5.1, 5.2, 6.1, 6.2) are of equal length.

5. Energy absorber element according to one of claims 1 to 4, **characterized in that** the first straight side walls (3, 4) are of equal length.

6. Energy absorber element according to one of claims 1 to 5, **characterized in that** the material thickness (d) is at most 2 mm.

7. Energy absorber element according to one of claims 1 to 6, **characterized in that** the tensile strength of the flat material $R_m$ is in the range of 600 MPa to 1200 MPa and the elongation at break of the flat material is greater than 9%.

8. Energy absorber element according to one of claims 1 to 7, **characterized in that** the flat material consists of a dual-phase steel or complex-phase steel.

**9.** Vehicle body having an energy absorber element (E2, E3) according to one of claims 1 to 8.

**Revendications**

**1.** Élément absorbeur d'énergie pour un véhicule à moteur, avec un profilé creux fermé (2) fait d'un matériau plat ayant une épaisseur de matériau (d), lequel profilé creux (2) présente une hauteur de profilé (h), une largeur de profilé (b) et quatre parois latérales (3, 4, 5, 6) parmi lesquelles deux premières parois latérales (3, 4) qui se font face sont droites et les deux autres deuxièmes parois latérales (5, 6) qui se font face présentent chacune une moulure longitudinale (7, 8) de forme triangulaire en section, en particulier ouverte, ayant une largeur de moulure (sb), les moulures longitudinales (7, 8) ayant la même forme et leurs fonds de moulure (7.1, 8.1) qui se font face étant séparés par un écart (sa), le profilé creux (2) présentant aux angles des coins arrondis (9.1, 9.2, 9.3, 9.4) identiques d'un certain rayon (r) sur lesquels se raccordent aussi bien la première paroi latérale droite (3, 4) correspondante que la deuxième paroi latérale (5, 6) correspondante, **caractérisé en ce que** le profilé creux (2) satisfait les conditions suivantes :

$$\frac{sa}{b} < 0{,}24$$

$$\frac{sb}{h - 2r} > 0{,}35$$

$$\frac{b}{h} = 0{,}28 \text{ à } 0{,}74$$

les deuxièmes parties latérales droites (5.1, 5.2, 6.1, 6.2) étant perpendiculaires aux premières parois latérales droites (3, 4).

**2.** Élément absorbeur d'énergie selon la revendication 1, **caractérisé en ce que** les premières parois latérales (3, 4) présentent une première largeur (bi), **en ce que** les deuxièmes parois latérales (5, 6) présentent chacune deux parties latérales droites (5.1, 5.2, 6.1, 6.2) ayant une deuxième largeur (hi), les deuxièmes parties latérales (5.1, 5.2, 6.1, 6.2) se raccordant chacune à un coin arrondi (9.1, 9.2, 9.3, 9.4) et s'étendant jusqu'à la moulure longitudinale (7, 8) correspondante, les moulures longitudinales (7, 8) présentant des parties de paroi de moulure droites (7.2, 7.3, 8.2, 8.3) d'une troisième largeur (si), le profilé creux (2) satisfaisant les conditions suivantes :

$$\frac{hi}{si} = 0{,}45 \text{ à } 2$$

$$\frac{hi}{bi} = 0{,}35 \text{ à } 1{,}75$$

$$\frac{bi}{si} = 0{,}7 \text{ à } 2.$$

**3.** Élément absorbeur d'énergie pour un véhicule à moteur, avec un profilé creux fermé (2) fait d'un matériau plat ayant une épaisseur de matériau (d), lequel profilé creux (2) présente une hauteur de profilé (h), une largeur de profilé (b) et quatre parois latérales (3, 4, 5, 6) parmi lesquelles deux premières parois latérales (3, 4) qui se font face sont droites et les deux autres deuxièmes parois latérales (5, 6) qui se font face présentent chacune une moulure longitudinale (7, 8) de forme triangulaire en section, en particulier ouverte, ayant une largeur de moulure (sb), les moulures longitudinales (7, 8) ayant la même forme et leurs fonds de moulure (7.1, 8.1) qui se font face étant séparés par un écart (sa), le profilé creux (2) présentant aux angles des coins arrondis (9.1, 9.2, 9.3, 9.4) identiques d'un certain rayon (r) sur lesquels se raccordent aussi bien la première paroi latérale droite (3, 4) correspondante que la deuxième paroi latérale (5, 6) correspondante, **caractérisé en ce que** le profilé creux (2) satisfait les conditions suivantes :

$$\frac{sa}{b} < 0,24$$

$$\frac{sb}{h - 2r} > 0,35$$

$$\frac{b}{h} = 0,28 \text{ à } 0,74$$

les moulures longitudinales (7, 8) se raccordant aux coins arrondis (9.1, 9.2, 9.3, 9.4) correspondants et le profilé creux (2) satisfaisant la condition

$$\frac{r}{d} > 6.$$

4. Élément absorbeur d'énergie selon l'une des revendications 1 à 2, **caractérisé en ce que** les deuxièmes parties latérales droites (5.1, 5.2, 6.1, 6.2) sont de longueur égale.

5. Élément absorbeur d'énergie selon l'une des revendications 1 à 4, **caractérisé en ce que** les premières parois latérales droites (3, 4) sont de longueur égale.

6. Élément absorbeur d'énergie selon l'une des revendications 1 à 5, **caractérisé en ce que** l'épaisseur de matériau (d) est au maximum de 2 mm.

7. Élément absorbeur d'énergie selon l'une des revendications 1 à 6, **caractérisé en ce que** la résistance à la traction du matériau plat $R_m$ se situe entre 600 MPa et 1200 MPa et l'allongement à la rupture du matériau plat est supérieur à 9 %.

8. Élément absorbeur d'énergie selon l'une des revendications 1 à 7, **caractérisé en ce que** le matériau plat se compose d'un acier à double phase ou à phase complexe.

9. Carrosserie de véhicule avec un élément absorbeur d'énergie (E2, E3) selon l'une des revendications 1 à 8.

# Fig. 1

*Fig. 2*

*Fig. 3*

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006136405 A1

- DE 102013202607 A1